# EUROPEAN PATENT SPECIFICATION

(11) **EP 2 952 713 B1**
(45) Date of publication and mention of the grant of the patent: **14.09.2016**
(21) Application number: 15170379.0
(22) Date of filing: 03.06.2015
(51) Int. Cl.: F02D 41/00, F02N 11/08, C10J 3/00, F02M 21/12, F02D 19/04, F02D 19/06, F02N 11/10

(54) **BIOMASS GAS-FIRED ENGINE**
MIT BIOMASSEGAS BEFEUERTER MOTOR
MOTEUR À GAZ DE BIOMASSE

(30) Priority: 03.06.2014 JP 2014114548; 03.06.2014 JP 2014114549; 03.06.2014 JP 2014114550
(43) Date of publication of application: 09.12.2015
(73) Proprietor: Yanmar Co., Ltd., Osaka-shi, Osaka 530-8311 (JP)
(72) Inventor: Nakazono, Toru, Osaka 530-8311 (JP); Watanabe, Yuta, Osaka 530-8311 (JP)
(74) Representative: Hinkelmann, Klaus

(56) References cited:
- EP-A1- 2 584 187
- EP-A1- 2 602 459
- JP-A- 2011 089 070

## Description

### [Field of the Invention]

The present invention relates to a biomass gas-fired engine system using biomass gas.

### [Background Art]

Conventionally, a dual fuel engine which runs on a combination of biomass gas and diesel fuel is known as an engine serving as a drive source in a cogeneration system or a heat pump system (see, for example, Patent Literature 1).

Biomass gas for this dual fuel engine is supplied from a gasification furnace. If the gasification furnace is stopped, it requires some time to generate biomass gas again. Hence, once the gasification furnace is started, it is not stopped until the end of the day's operation. Besides, the amount of biomass gas and the combustion calories of biomass gas generated in the gasification furnace are non-constant and unstable.

In contrast to the gasification furnace, the dual fuel engine can start and stop its operation as many times as required under the control conditions of the cogeneration system or the heat pump system.

Hence, in the case where the amount of generated biomass gas and the combustion calories are excessive in view of the operating state of the dual fuel engine, or in the case where the dual fuel engine is stopped, excess gas is burned by flare stack in order to keep a stable operating state. On the other hand, in the case where the amount of generated biomass gas and the combustion calories are little, diesel fuel compensates for a lack of biomass gas in order to keep a stable operating state.

Since the dual fuel engine utilizes diesel fuel in order to compensate for a lack of biomass gas, the biomass gas supply path is under a negative pressure due to the Venturi effect even when the amount of biomass gas is insufficient. Therefore, biomass gas and its residue are unlikely to remain and accumulate in the biomass gas supply path.

### [Prior Art Documents]

### [Patent Literature]

[Patent Literature 1] JP 2011-89070 A

### [SUMMARY OF THE INVENTION]

### [Problems to be Solved by the Invention]

The above-described conventional dual fuel engine runs on a combination of biomass gas and diesel fuel, and compensates for a lack of biomass gas by utilizing the diesel fuel. However, the dual fuel engine which does not run only on biomass gas has a limited environmental improvement effect.

For a satisfactory effect, it is also conceivable to employ a gas engine which runs only on biomass gas without relying on diesel fuel. This gas engine, however, cannot apply a negative pressure to the biomass gas supply path, so that biomass gas remains in the biomass gas supply path and its residue is likely to attach to a pressure regulating valve such as a governer. Eventually, this gas engine requires frequent maintenance work.

In particular, biomass gas is generated by baking and fermenting biomass gas materials (e.g. wood materials) in a gasification furnace, and then by cooling the generated gas to a usable temperature by means of a scrubber or the like. This process makes the biomass gas very humid. If the humid biomass gas stops in the biomass gas supply path, the residue in the biomass gas turns into a tarry mixture with dew condensation water and is likely to adhere to the engine components. Such a gas engine needs frequent maintenance work and sacrifices the operational efficiency.

To prevent the residue in the biomass gas from adhering to the pressure regulating valve such as a governer, the biomass gas supply path near the pressure regulating valve such as a governer may be purged with air every time the gas engine stops. However, in order to restart the gas engine, a starter motor must be run for an excessive time until the air is evacuated from the biomass gas supply path. This operation not only causes start stall but also increases a load on the starter motor and shortens its service life.

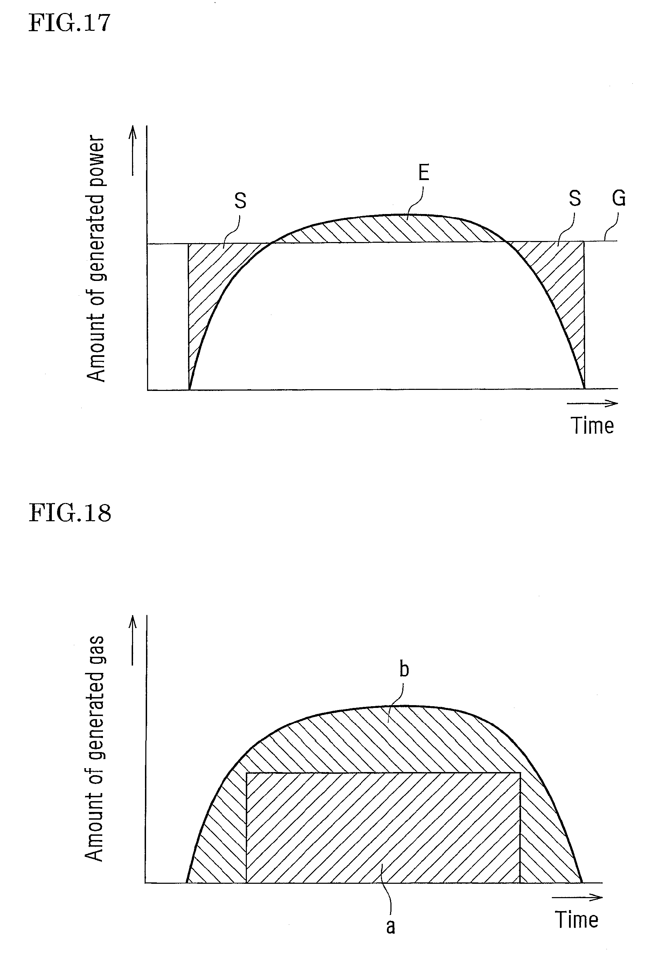

The gas engine which runs only on biomass gas involves yet another disadvantage. When the amount of generated biomass gas decreases, or when the combustion calories are insufficient, the operating state of the gas engine gets out of its control range even though the A/F valve which determines the amount of biomass gas supply is fully open. In this case, the gas engine is unable to control the air-fuel ratio, suffers from deterioration of the emission gas purification performance, and generates NOx. To tackle this problem, as shown in FIG. 18, the gas engine which runs only on biomass gas utilizes the biomass gas a obtained in the time domain where a certain amount of gas can be constantly generated, and the other excess gas b is burned by flare stack. This is inconvenient due to an increase in waste biomass gas.

The present invention is made in view of these circumstances, and aims to provide a biomass gas-fired engine system which can prevent start stall, can reduce the frequency of maintenance work, and can enhance the operational efficiency.

### [Means for Solving the Problems]

In order to solve the above-mentioned problems, a biomass gas-fired engine system according to the present invention is configured to generates biomass gas in a gasification furnace and to supply the biomass gas to an engine through a zero governor unit. The zero governor unit is connected with an air supply path for purging residual gas out of a zero governor with air. Residual gas is purged out of the zero governor with air, after supply of the biomass gas from the gasification furnace has ended. The biomass gas-fired engine system is equipped with a control section which is configured to provide control for extending a normal operation time of a starter motor by a time to recharge biomass gas in an amount corresponding to an amount of residual gas expelled by the air purge, only when the engine is started for a first time after the gasification furnace starts to supply the biomass gas.

In the biomass gas-fired engine system, the control section may be configured to rotate the starter motor at a valve opening rate which is greater by a predetermined rate than a start opening rate, during an initial period of rotation of the starter motor when the engine is started for the first time after the gasification furnace starts to supply the biomass gas. The control section may be also configured to return the valve opening rate to the start opening rate after the biomass gas is recharged into the zero governor and a gas piping which have been purged with air.

In the biomass gas-fired engine system, the valve opening rate which is greater by a predetermined rate may be a fully open state.

In the biomass gas-fired engine system, a pressure sensor may be provided in a gas supply path which leads out of the gasification furnace. The control section may be configured to increase or decrease an engine load in accordance with a change in a biomass gas pressure.

In the biomass gas-fired engine system, an heated exhaust gas oxygen sensor or an universal exhaust gas oxygen sensor may be provided in an engine exhaust path. The control section may be configured to increase or decrease an engine load in accordance with a change in combustion calories of the biomass gas.

In the biomass gas-fired engine system, the biomass gas may be supplied from the zero governor to an A/F valve of the engine. An air outlet which opens to an actuator on a diaphragm of the zero governor may be equipped with a variable valve, and may be also equipped with an air supply path which can apply air pressure to the actuator. In the case where the opening rate of the A/F valve is greater by a predetermined rate than the opening rate corresponding to an excess air ratio associated with a preset load, the control section may be configured to apply air pressure from the air supply path to the actuator, and may be also configured to regulate the air pressure by the variable valve in such a manner as to increase a supply pressure of the biomass gas supplied to the A/F valve.

In the biomass gas-fired engine system, the biomass gas may be supplied from the zero governor to an A/F valve and a throttle of the engine. A bypass path for the biomass gas may be provided between an upstream side of the A/F valve and a downstream side of the throttle. In the case where the opening rate of the A/F valve is greater by a predetermined rate than the opening rate corresponding to an excess air ratio associated with a preset load, the control section may be configured to open a valve provided in the bypass path and to supply the biomass gas directly to the downstream side of the throttle.

In the biomass gas-fired engine system, the biomass gas may be supplied from the zero governor to an A/F valve of the engine. The control section may detect an opening rate of the A/F valve, may detect whether a supply pressure of the biomass gas is normal or not, may detect an outlet pressure of the zero governor, and may detect an output from an universal exhaust gas oxygen sensor or an heated exhaust gas oxygen sensor for exhaust gas. In the case where the opening rate of the A/F valve is greater by a predetermined rate than the opening rate corresponding to an excess air ratio associated with a preset load, the control section may detect malfunction of the zero governor if the supply pressure of the biomass gas is normal, if the outlet pressure of the zero governor is negative, and if the exhaust gas is lean.

In the biomass gas-fired engine system, the biomass gas may be supplied from the zero governor to an A/F valve of the engine. In the case where the opening rate of the A/F valve is greater by a predetermined rate than the opening rate corresponding to an excess air ratio associated with a preset load, and also where an operating state of the engine is on a lean side out of a purification window, the control section may provide control for retarding an ignition timing and thereby keeping the operating state of the engine within the purification window.

In the biomass gas-fired engine system, the biomass gas may be supplied from the zero governor to an A/F valve of the engine. The control section may be configured to provide perturbation control by switching the A/F valve between a lean side and a rich side. In the case where the opening rate of the A/F valve is greater by a predetermined rate than the opening rate corresponding to an excess air ratio associated with a preset load, the control section may be configured to increase a variation range for the perturbation control.

### [Effects of the Invention]

According to the present invention as described above, the zero governor unit is connected with an air supply path for purging residual gas out of the zero governor with air. Residual gas is purged out of the zero governor by air, after supply of the biomass gas from the gasification furnace has ended. A control section provides control for extending a normal operation time of a starter motor by a time to recharge biomass gas in an amount corresponding to an amount of residual gas expelled by the air purge, only when the engine is started for a first time after the gasification furnace starts to supply the biomass gas. Owing to this arrangement, the engine can be started while preventing the residue in the biomass gas from turning into a tarry mixture with dew condensation water and from adhering to the zero governor. The operation time of the starter motor is extended only at the first start of the engine after the gasification furnace starts to supply biomass gas subsequent to the air purge. Hence, it is possible to improve the operational efficiency of the engine without start stall, to prevent overuse of the starter motor, and to reduce the frequency of maintenance work for the engine.

### [BRIEF DESCRIPTION OF THE DRAWINGS]

FIG. 1 is a schematic diagram showing an overall configuration of a biomass gas-fired engine system according to the present invention.
FIG. 2 is a graph showing time-course changes with regard to the operating state of a gasification furnace, the timings for starting and stopping the engine, the timing for purging a zero governor with air, in the biomass gas-fired engine system according to present invention.
FIG. 3 includes graphs showing time-course changes with regard to the starter motor, the shutoff valve, and the engine speed, comparing the case where the engine in the biomass gas-fired engine system according to the present invention is started under control and the case where the engine in the biomass gas-fired engine system according to the present invention is started for the first time after the gasification furnace starts to supply biomass gas.
FIG. 4 is a schematic diagram showing an engine configuration in the biomass gas-fired engine system according to the present invention.
FIG. 5 is a graph for another embodiment of the biomass gas-fired engine system according to the present invention, showing time-course changes with regard to the starter motor, the shutoff valve, and the engine speed, in the case where the engine is started for the first time after the gasification furnace starts to supply biomass gas.
FIG. 6 is a graph showing the relationship between the concentrations of exhaust gases and the excess air ratio, together with a purification window, in the biomass gas-fired engine system according to the present invention.
FIG. 7 is a graph for explaining the control described in Example 1 for the biomass gas-fired engine system according to the present invention, and shows the relationship between the excess air ratio and the flow rate of the air-fuel mixture, with and without the use of an air purge blower.
FIG. 8 is a schematic diagram showing an engine configuration for the control described in Example 2 in the biomass gas-fired engine system according to the present invention.
FIG. 9 is a table showing check items for a control section for the control described in Example 3 in the biomass gas-fired engine system according to the present invention.
FIG. 10 is a graph for explaining the control described in Example 4 for the biomass gas-fired engine system according to the present invention, and shows the relationship between the NOx concentration and the ignition timing for the engine in the case where the operating state is on the lean side out of the purification window.
FIG. 11 includes graphs for explaining the control described in Example 5 for the biomass gas-fired engine system according to the present invention, and shows a time-course change of the valve opening rate during perturbation control of the A/F valve and a time-course change of the corresponding variation range of the A/F valve opening rate.
FIG. 12 includes graphs for explaining the control described in Example 5 for the biomass gas-fired engine system according to the present invention. The upper graph shows a change in the variation range at each valve opening rate of the A/F valve during perturbation control, and the lower graph shows the relationship between the combustion calories of the biomass gas and the opening rate of the A/F valve.
FIG. 13 is a graph showing the relationship between the valve opening rate of the throttle valve and the amount of biomass gas supply, during the normal operation of the biomass gas-fired engine system according to the present invention, during the controlled operation in Example 1, and during the controlled operation in Example 2.
FIG. 14 includes graphs for explaining the control described in Example 6 for the biomass gas-fired engine system according to the present invention. FIG. 14(a) is a graph showing a time-course change of load control relative to the change in the combustion calories of the biomass gas. FIG. 14(b) is a graph showing a time-course change of load control relative to the change in the amount of generated biomass gas.
FIG. 15 explains the control described in Example 6 for the biomass gas-fired engine system according to the present invention. FIG. 15(a) relates to a control logic for load control in the cases where the combustion calories of the biomass gas increase and decrease. FIG. 15(b) relates to a control logic for load control in the cases where the amount of generated biomass gas increase and decrease.
FIG. 16 is a schematic diagram showing an overall configuration for applying the biomass gas-fired engine system according to the present invention to a cogeneration unit.
FIG. 17 is a graph showing the relationship between the purchase and selling of electric power obtained by the control as shown in FIGs. 14(a) and 14(b), in the cogeneration system utilizing the biomass gas-fired engine system according to the present invention.
FIG. 18 is a graph for explaining the state of use of biomass gas in a conventional biomass gas-fired engine system.

### [DESCRIPTION OF THE EMBODIMENTS]

Hereinafter, embodiments of the present invention are described with reference to the drawings.

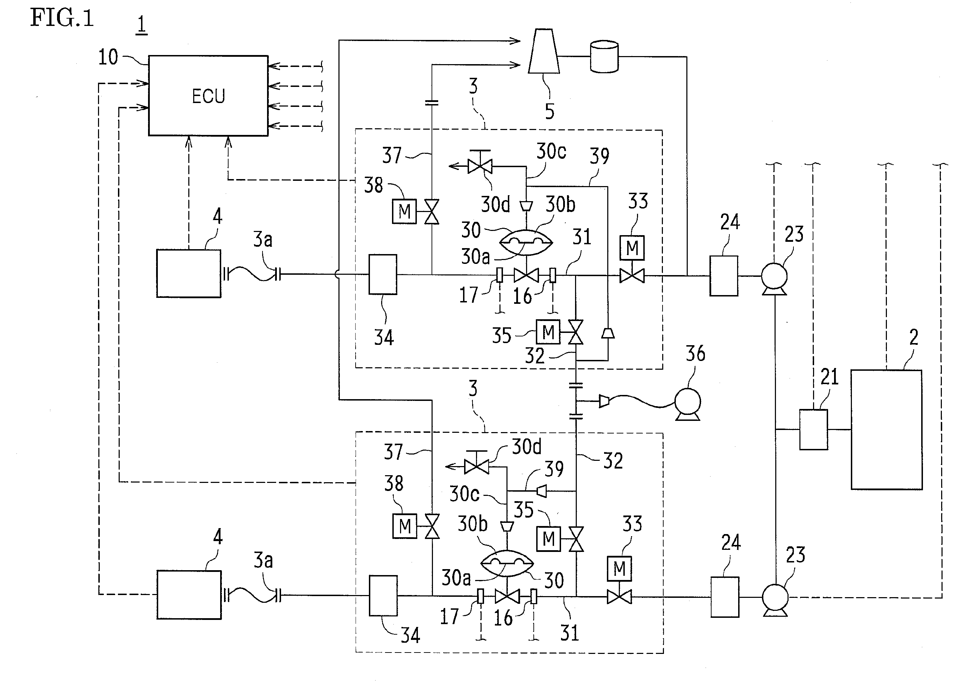

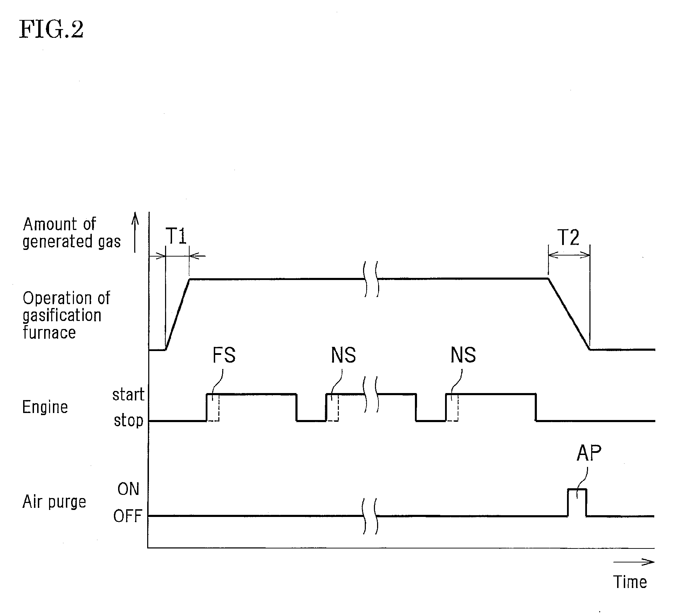

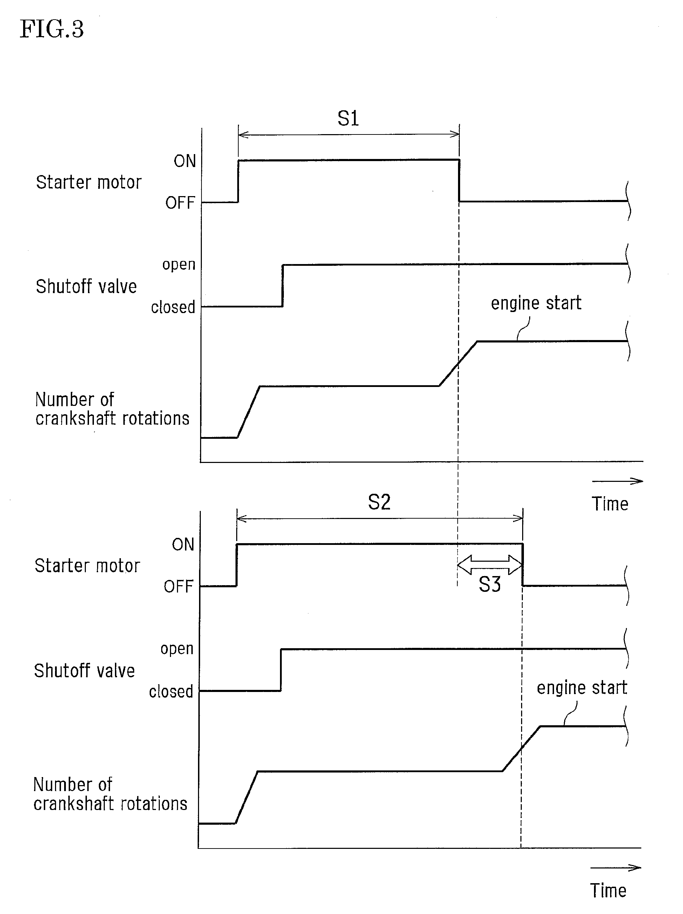

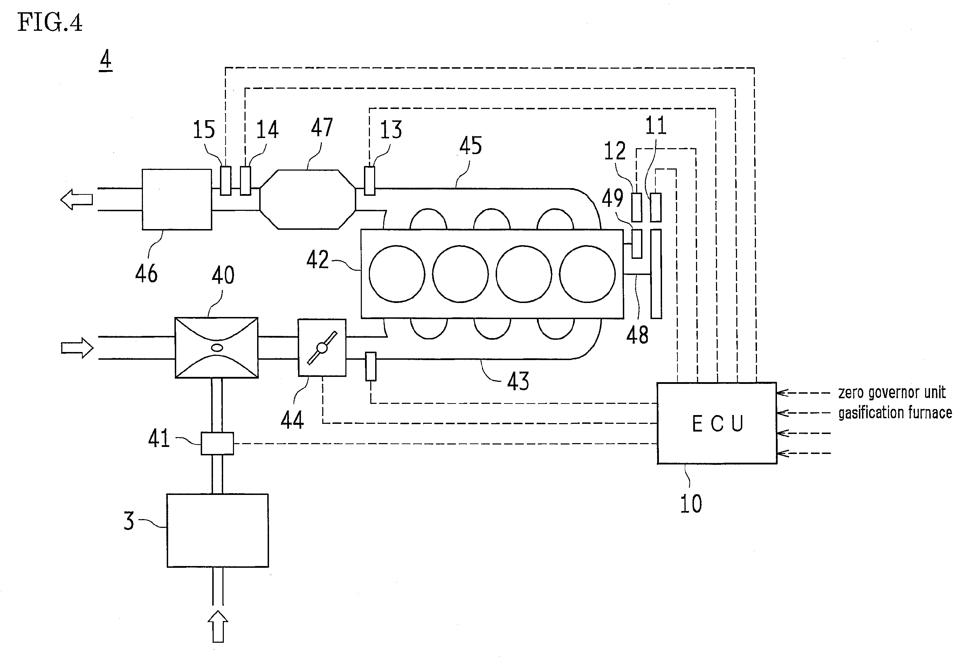

FIG. 1 is a schematic diagram showing an overall configuration of a biomass gas-fired engine system 1. FIG. 2 is a graph showing time-course changes and their relationship with regard to the operating state of a gasification furnace 2, the timings for starting and stopping an engine 4, and the timing for purging a zero governor 30 with air in the biomass gas-fired engine system 1. FIG. 3 includes graphs showing time-course changes with regard to a starter motor 49, a gas shutoff valve 33, and an engine speed of the engine 4, comparing the case where the engine 4 in the biomass gas-fired engine system 1 is started under control and the case where the engine 4 is started in conjunction with the start of the operation of the gasification furnace 2. FIG. 4 shows a configuration of the engine 4 in the biomass gas-fired engine system 1.

In the biomass gas-fired engine system 1 according to the present invention, biomass gas is generated in the gasification furnace 2, and is supplied through the zero governor units 3 to the engines 4. Each of the zero governor units 3 is equipped with an air supply path 32 for purging residual gas out of the zero governor 30 with air. The control section 10 provides control for purging residual gas out of the zero governors 30 with air, only after the engines 4 stop in conjunction with the termination of the operation of the gasification furnace 2, and also provides control for extending the normal operation time of starter motors by a time for re-charging biomass gas in an amount corresponding to the amount of residual gas replaced by the air purge, only when the engines 4 start in conjunction with the start of the operation of the gasification furnace 2.

The gasification furnace 2 is composed of a furnace in which biomass materials such as wood chips and chaff undergo pyrolysis. Pyrolysis under a low-oxygen condition generates hydrocarbons and other decomposed gases, as biomass gas.

Because of the pyrolysis, the biomass gas generated in the gasification furnace 2 is too hot to be used as it is. Hence, the biomass gas is cooled while flowing through a scrubber 21 which is provided downstream of the gasification furnace 2 and which is arranged to disperse water in a space.

After flowing through the scrubber 21, the biomass gas is fed downstream by one or more blowers 23. Since the number of connectable engines 4 may vary in accordance with the amount of generated biomass gas, the biomass gas may be fed to a single path or branched into a plurality of paths (two paths in this embodiment) corresponding to the number of engines 4 (in order to simplify the description, the following description focuses on only one of such paths and engines). At this stage, the biomass gas cooled by the scrubber 21 contains a large quantity of moisture. To collect condensed water contained in the biomass gas, a drain pot 24 is provided downwardly of the blower 23. After the condensed water is removed, the biomass gas is supplied through the zero governor unit 3 to the engine 4. The gasification furnace 2, the scrubber 21, the blower 23, and other like elements are controlled by the control section 10.

The biomass gas passing through the drain pot 24 is supplied to the zero governor unit 3.

The zero governor unit 3 is arranged to supply the biomass gas fed from the gasification furnace 2, through the zero governor 30 provided in a gas supply path 31, to the engine 4.

A gas shutoff valve 33 is provided on the upstream end side of the gas supply path 31 and serves to shut off supply of the biomass gas to the gas supply path 31. Another drain pot 34 is provided on the downstream end side of the gas supply path 31 and serves to collect condensed water contained in the biomass gas again before the biomass gas is supplied to the engine 4.

In this gas supply path 31, the zero governor 30 is provided between the gas shutoff valve 33 and the drain pot 34. The zero governor 30 has a diaphragm 30a, an actuator 30b on the diaphragm 30a, an atmospheric pressure release path 30c leading from the actuator 30b, and a pressure regulating valve 30d provided in the atmospheric pressure release path 30c. When the pressure regulating valve 30d is opened to bring the atmospheric pressure release path 30c to the atmospheric pressure, the zero governor 30 allows the biomass gas fed from the gas supply path 31 upstream of the zero governor 30 (hereinafter, "the upstream gas supply path 31") to be supplied to the gas supply path 31 downstream of the zero governor 30 (hereinafter, "the downstream gas supply path 31") under the atmospheric pressure, irrespective of the supply pressure in the upstream gas supply path 31. A pressure sensor 16 for measuring a primary gas pressure of the biomass gas fed to the zero governor 30 is provided in the upstream gas supply path 31. A pressure sensor 17 for measuring a secondary gas pressure of the biomass gas coming out of the zero governor 30 is provided in the downstream gas supply path 31. Information from these pressure sensors 16, 17 is sent to the control section 10.

The air supply path 32 is connected with the gas supply path 31 between the gas shutoff valve 33 and the zero governor 30. Normally, communication between the air supply path 32 and the gas supply path 31 is shut off by an air purge valve 35 which is provided on the air supply path 32 side. When air purge is required, the air purge valve 35 is opened to allow air to flow from the air supply path 32 to the gas supply path 31 and thereby to purge the zero governor 30 with air. For this purpose, an air purge blower 36 is provided on the upstream end side of the air supply path 32.

The gas supply path 31 is connected, between the zero governor 30 and the drain pot 34, with a discharge path 37 for discharging excess biomass gas to the flare stack 5. Excess biomass gas is burned by the flare stack 5. The discharge path 37 is equipped with an air purge relief valve 38. The air purge relief valve 38 is kept open when the zero governor 30 is purged with air, so that purged air can be let out from the gas supply path 31 through the discharge path 37 to the outside.

To purge the zero governor 30 with air, the air purge blower 36 is activated in a state where the gas shutoff valve 33 in the gas supply path 31 is closed, and where the air purge valve 35 in the air supply path 32 and the air purge relief valve 38 in the discharge path 37 are opened. In this state, however, the air introduced into the gas supply path 31 is discharged from the atmospheric pressure release path 30c by the operation of the zero governor 30. To prevent such a discharge, a bypass path 39 is provided between the atmospheric pressure release path 30c of the zero governor 30 and the air supply path 32, so that air from the air purge blower 36 can also act on the atmospheric pressure release path 30c of the zero governor 30. When the zero governor 30 is purged with air, air is supplied from the air purge blower 36, flows in the air supply path 32, passes through the zero governor 30, then flows into the discharge path 37 through the air purge relief valve 38, and is finally discharged to the outside.

An outlet 3a, which corresponds to the downstream end of the gas supply path 31 in the zero governor unit 3, is connected to an A/F valve 41 of the engine 4. Hence, the biomass gas passing through the drain pot 34 of the zero governor unit 3 can be supplied to the A/F valve 41 of the engine 4. The zero governor unit 3 is controlled by the control section 10.

In an air intake path 43 connected to a cylinder head 42, the engine 4 is equipped with a mixer 40 for mixing air with the biomass gas fed through the A/F valve 41. A throttle valve 44 is provided between the mixer 40 and the cylinder head 42. A silencer 46 is provided in an exhaust path 45 connected with the cylinder head 42. A ternary catalyst 47 is provided between the silencer 46 and the cylinder head 42.

The engine 4 is equipped with an advance sensor 11 for detecting a rotation angle of a crankshaft 48, and an energization sensor 12 for controlling conduction to a starter motor 49. A pre-HEGO(heated exhaust gas oxygen) sensor 13 is provided on the exhaust gas inlet side of the ternary catalyst 47. A post-HEGO sensor 14 and an UEGO(universal exhaust gas oxygen) sensor 15 are provided on the exhaust gas outlet side of the ternary catalyst 47.

In order to start the biomass gas-fired engine system 1, the control section 10 is arranged to energize the starter motor 49 of the engine 4 via the energization sensor 12 and is also arranged to detect, by the advance sensor 11 for detecting the rotation angle of the crankshaft 48, whether the engine 4 has started.

The control section 10 is further arranged to control the amount of biomass gas to be generated in the gasification furnace 2. The control section 10 has a control map in which the relationship of the opening rate of the A/F valve 41 with the detection results from the pre-HEGO sensor 13, the post-HEGO sensor 14, and the UEGO sensor15, under the condition where the engine 4 runs on biomass gas in stoichiometric mode under perturbation control, is inputted. In accordance with the information of the control map, the control section 10 provides perturbation control for operating the engine 4 in stoichiometric mode.

The control section 10 is also arranged to control the zero governor unit 3. When the biomass gas-fired engine system 1 is stopped, the control section 10 provides control for stopping the operation of the gasification furnace 2 and the engine 4 and for purging the zero governor 30 with air.

Next, the description turns to a mode of control provided by the control section 10 in the biomass gas-fired engine system 1 as configured above.

As shown in FIG. 2, at the start of the biomass gas-fired engine system 1, the control section 10 starts the operation of the gasification furnace 2 and also starts the engine 4 in conjunction with the gasification furnace 2. Considering the fact that the gasification furnace 2 does not generate a sufficient amount of biomass gas immediately after its start, the control section 10 does not start the engine 4 until the amount of generated biomass gas has reached a suppliable amount (i.e. after a time T1 has passed).

If the gasification furnace 2 is stopped, it takes some time again to generate biomass gas in a suppliable amount. Hence, the control section 10 continues the operation of the gasification furnace 2 unless the biomass gas-fired engine system 1 is stopped. In contrast, the engine 4 may be stopped and started repeatedly during the day's operation under the conditions set by the control section 10.

Once the biomass gas-fired engine system 1 is stopped, the control section 10 stops both the gasification furnace 2 and the engine 4 by its stop program. At this moment, the engine 4 can stop immediately. On the other hand, the gasification furnace 2 needs a time T2, after it is stopped, until the generation of biomass gas gradually comes to a halt. Excess biomass gas generated after the stop of the engine 4 is burned by the flare stack 5. Besides, even after the time T2 during which the generation of biomass gas ends in the gasification furnace 2, biomass gas remains in the zero governor 30 and the gas supply path 31. The residual biomass gas which has passed through the scrubber 21 is almost as humid as the saturated vapor, even after condensed water in the biomass gas is removed in the drain pot 24. In addition, some time after the biomass gas-fired engine system 1 is stopped, moisture in the residual biomass gas in the zero governor 30 and the gas supply path 31 is condensed due to a drop of environmental temperature. The moisture is mixed with hydrocarbons and other components of the biomass gas to produce a tarry residue. The tarry residue, if adhering to the zero governor 30, causes malfunction of the zero governor 30.

Hence, according to the stop program of the biomass gas-fired engine system 1, when the time T2 during which the generation of biomass gas ends in the gasification furnace 2 has almost passed, the control section 10 provides control for effecting air purge AP in the zero governor 30 by closing the gas shutoff valve 33 in the gas supply path 31, by opening the air purge valve 35 in the air supply path 32 and the air purge relief valve 38 in the discharge path 37, and by activating the air purge blower 36.

The air purge AP removes the residual biomass gas in the zero governor 30 and in the gas supply path 31 upstream and downstream of the zero governor 30. As a result, the biomass gas-fired engine system 1 can prevent malfunction of the zero governor 30 caused by the residue in the residual gas. It is also possible to avoid adhesion of the residue and to reduce the frequency of maintenance work.

As described, the air purge AP of the zero governor 30 removes residual biomass gas in the zero governor 30 and in the gas supply path 31 upstream and downstream of the zero governor 30. In order to start the engine 4 after the air purge (FS in FIG. 2), biomass gas needs to be recharged. Specifically, the starter motor 49 is rotated for a longer period than the normal start NS of the engine 4 by a time S3 (see FIG. 3) for recharging biomass gas in an amount corresponding to the amount of air purge AP, thereby expelling air in the gas supply path 31 and recharging biomass gas.

Hence, when the biomass gas-fired engine system 1 is stopped and restarted later, the control section 10 provides control for rotating the starter motor 49 for a longer period than the normal start NS of the engine 4 by a time S3 for recharging biomass gas in an amount corresponding to the amount of air purge AP, only at the first start FS of the engine 4 after the gasification furnace 2 starts to supply the biomass gas. This control expels air in the gas supply path 31 and allows the start of the engine 4.

In this embodiment, the air purge AP in the zero governor 30 may be effected at every normal stop of the engine 4. After the air purge, however, biomass gas needs to be recharged at every normal start NS of the engine 4 as described above, by rotating the starter motor 49 for a longer period than the normal start NS of the engine 4 by the time S3 for recharging biomass gas in an amount corresponding to the amount of air purge AP. Frequent air purge not only causes start stall, but also wears out the starter motor 49 heavily due to overuse.

When the engine 4 is started under the condition set by the control section 10, is stopped, and is restarted during the operation of the biomass gas-fired engine system 1, the stop time between the stop and the restart of the engine 4 is shorter than the stop time between the stop and the restart of the biomass gas-fired engine system 1, namely, shorter than the stop time between the stop and the restart of the gasification furnace 2. Hence, the temperature will not drop so much as to cause condensation of moisture in the biomass gas.

Therefore, the air purge AP in the zero governor 30 is carried out only after the termination of biomass gas supply from the gasification furnace 2, which occurs after the stop of the biomass gas-fired engine 1.

However, if the biomass gas-fired engine 1 is operated continuously for a long term (e.g. for days or weeks), the control section 10 may provide control for effecting the air purge AP in the zero governor 30 in synchronization with the timing when the engine 4 is stopped by the control section 10. As described above, in order to start the engine 4 after the air purge AP of the zero governor 30, it is necessary to recharge biomass gas into the space cleared by the air purge AP, by rotating the starter motor 49 for a longer period by a time for recharging biomass gas in an amount corresponding to the amount of air purge AP. Therefore, it is preferable to effect the air purge AP in the zero governor 30 at a timing when there is a plenty of time for restart.

As shown in FIG. 3, in order to start the engine 4 by the starter motor 49, the starter motor 49 is rotated to generate a negative pressure in the gas supply path 31, and the gas shutoff valve 33 is released thereafter. By this operation, biomass gas is supplied to the engine 4 via the zero governor 30. In this process, when the engine 4 is controlled to stop and restart by the control section 10, a time S1 represents an operation time of the starter motor 49 for the normal start NS of the engine 4. When the engine 4 is restarted after the zero governor 30 is purged with air, a time S2 represents an operation time of the starter motor 49 for the first start FS of the engine 4 after the gasification furnace 2 starts to supply the biomass gas. The operation time S2 of the starter motor 49 is set longer than the normal operation time S1 of the starter motor 49 by the time S3 for recharging biomass gas in an amount corresponding to the amount of purged air.

By this arrangement, the first start FS of the engine 4 after the air purge AP can be as smooth as the normal start NS, or a controlled restart, of the engine 4. The operation time S2 of the starter motor 49 at the first start FS of the engine 4 after the air purge AP is extended only at the first start FS of the engine 4 after the gasification furnace 2 starts to supply biomass gas subsequent to the air purge AP. It is therefore possible to improve the operational efficiency of the engine 4 without start stall, to prevent overuse of the starter motor 49, and to reduce the frequency of maintenance work for the engine 4.

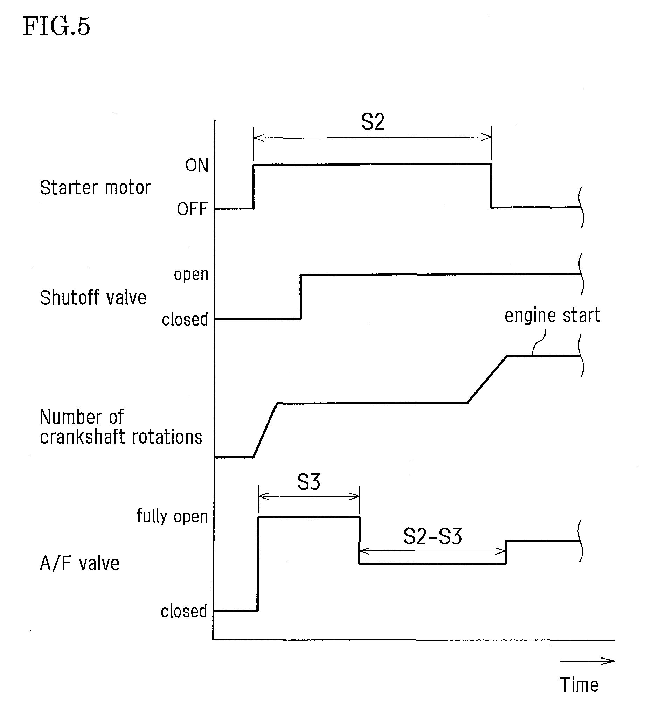

Generally, when the starter motor 49 is driven, the A/F valve 41 of the engine 4 is likely to be at a valve opening rate suitable for the start of the engine 4. However, as described above, the operation time S2 of the starter motor 49 is extended after the air purge AP in order to recharge biomass gas into the gas supply path 31 and the zero governor 30 in an amount corresponding to the amount of air purge AP. In the extended operation time S2 of the starter motor 49, the valve opening rate of the A/F valve 41 may be changed during the time S3 for recharging biomass gas to the space cleared by the air purge AP. As shown in FIG. 5, the opening rate of the A/F valve 41 may be greater than the valve opening rate suitable for the start of the engine 4 (for example, may be at a full-open position) for quick recharge of biomass gas. During the subsequent operation time (S2-S3) of the starter motor 49, the opening rate of the A/F valve 41 may be changed to a valve opening rate suitable for the start of the engine 4. Then, after the start of the engine 4, the opening rate of the A/F valve 41 may be changed to a valve opening rate suitable for the control of the engine 4.

This control can shorten the time S3 for recharging biomass gas into the space cleared by the air purge AP, and can further shorten the operation time S2 of the starter motor 49 which should be extended. Therefore, it is possible to reduce the load on the starter motor 49, to mitigate wearing of the starter motor 49, and to improve the operational efficiency of the engine 4 without start stall.

Next, the description turns to another mode of control provided by the control section 10 in the biomass gas-fired engine system 1 as configured above.

### - Example 1 -

At the start of the biomass gas-fired engine system 1, the control section 10 starts the operation of the gasification furnace 2 and also starts the engine 4 in conjunction with the gasification furnace 2. Considering the fact that the gasification furnace 2 does not generate a sufficient amount of biomass gas immediately after its start, the control section 10 does not start the engine 4 until the amount of generated biomass gas has reached a suppliable amount. Whether the amount of generated biomass gas has reached a suppliable amount can be judged by whether the primary gas pressure detected by the pressure sensor 16 upstream of the zero governor 30 has exceeded a predetermined value.

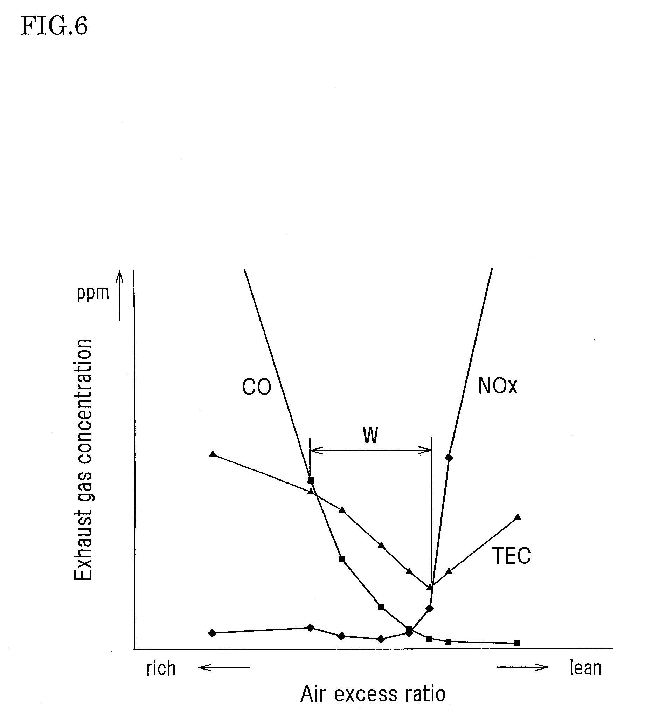

Thereafter, as shown in FIG. 6, the engine 4 keeps running on biomass gas from the gasification furnace 2, in the range of the purification window W with minimum generation of CO, NOx, and hydrocarbons.

During the operation, if the combustion calories of the biomass gas supplied from the gasification furnace 2 drop significantly, the operating state is on the lean side out of the purification window W even with the A/F valve 41 being fully open. Eventually, generation of NOx increases.

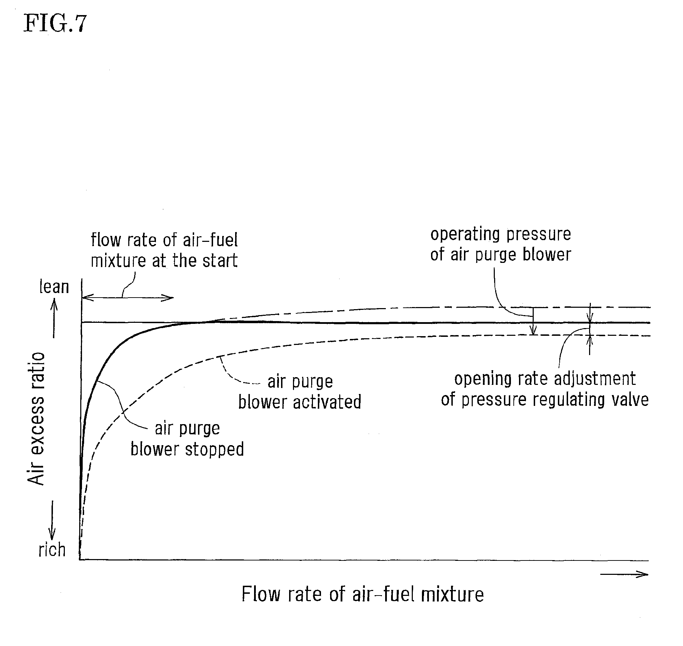

In the situation where the A/F valve 41 is fully opened, the control section 10 activates the air purge blower 36. Air from the air purge blower 36 flows through the air supply path 32, the bypass path 39, and the atmospheric pressure release path 30c, and acts on the zero governor 30. Then, similar to the air pressure acting on the zero governor 30, the biomass gas flowing through the zero governor 30 can be supplied at a higher supply pressure. Thereby, the excess air ratio relative to the flow rate of the air-fuel mixture flowing through the throttle valve 44 can be brought to the rich side, as shown in FIG. 7. As a result, the A/F valve 41, which no longer needs to be at the full-open position, can serve to control the operating state of the engine.

In this case, the supply pressure of the biomass gas is determined by the air pressure acting on the zero governor 30. The air pressure acting on the zero governor 30 can be regulated by adjusting the opening rate of the pressure regulating valve 30d provided in the atmospheric pressure release path 30c.

The opening rate of the A/F valve 41 is originally set by the control section 10 in such a manner as to keep a high supply pressure of the biomass gas. However, this opening rate is not necessarily suitable when the load on the engine 4 is changed or when the engine 4 is started, because a sudden change in the excess air ratio results in engine stall. Hence, when the load on the engine 4 is changed or when the engine 4 is started, the air purge blower 36 is stopped to bring the supply pressure of the biomass gas back to the atmospheric pressure. Later, if the operating state is still on the lean side out of the purification window W even with the A/F valve 41 being fully open, the air purge blower 36 is activated again.

Since the control section 10 can control the operation of the biomass gas-fired engine system 1 in the above-mentioned manner, it is possible to prevent the A/F valve 41 from being fully open. Eventually, it is possible to avoid a lack of combustion calories of the biomass gas, to prevent the operating state from being on the lean side out of the purification window W, and to avoid an increase in NOx generation.

Besides, when the load or the rotating speed of the engine 4 is changed, the supply pressure of the biomass gas is brought back to the atmospheric pressure prior to the change in the load or the rotating speed of the engine 4. Such a control can prevent a sudden change in the air-fuel ratio and can avoid engine stall.

### - Example 2-

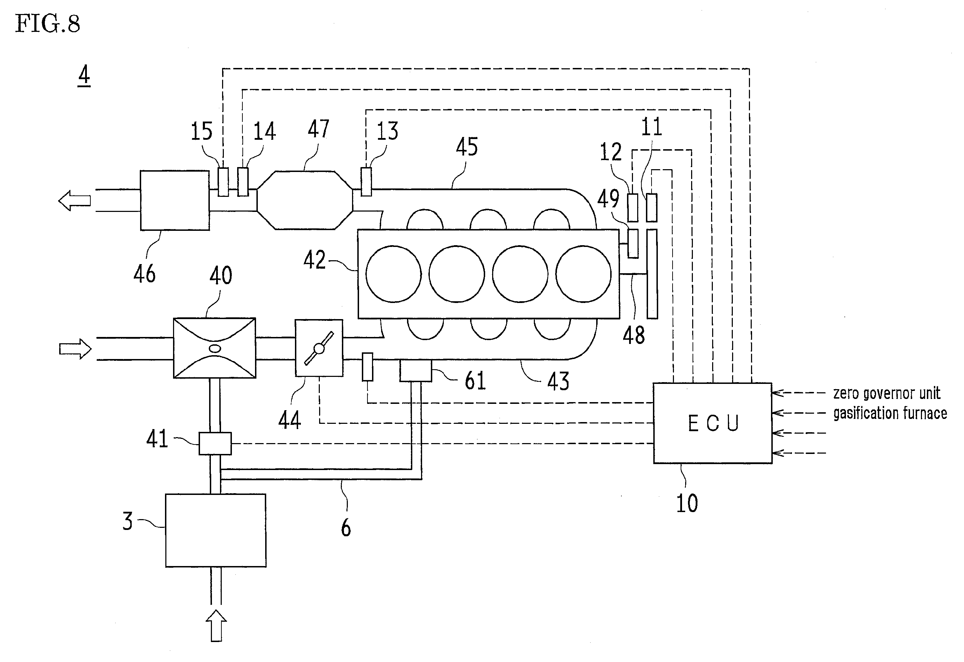

FIG. 8 shows another configuration of the engine 4. In the engine 4, a bypass supply path 6 for biomass gas is provided between the upstream side of the A/F valve 41 and the downstream side of the throttle valve 44. The bypass supply path 6 is opened and closed by an on/off valve 61. Other arrangements are similar to those in the above-described engine 4. Similar elements are indicated by similar reference numerals, and a detailed description of the similar elements is omitted.

Similar to the biomass gas-fired engine system 1 in Example 1, the biomass gas-fired engine system 1 in Example 2 normally allows the engine 4 to keep running on biomass gas from the gasification furnace 2, in the range of the purification window W with minimum generation of CO, NOx, and hydrocarbons.

During the operation, if the combustion calories of the biomass gas supplied from the gasification furnace 2 drop significantly, the operating state is on the lean side out of the purification window W even with the A/F valve 41 being fully open. Eventually, the generation of NOx increases.

In the situation where the A/F valve 41 is fully opened, the control section 10 opens the normally closed on/off valve 61 so as to establish communication with the bypass supply path 6. Before the communication is established, biomass gas is supplied by Venturi effect of intake air which flows through the A/F valve 41 and which acts on the mixer 40. Once the communication is established, a part of the biomass gas is directly supplied, via the bypass supply path 6, to the air intake path 43 just before the air is taken into the cylinder head 42 located downstream of the throttle valve 44. This arrangement can increase the biomass gas concentration in the air-fuel mixture supplied to the air intake path 43. As a result, the A/F valve 41, which no longer needs to be at the full-open position, can serve to control the operating state of the engine.

The biomass gas concentration in the air-fuel mixture can be regulated by adjusting the opening rate of the on/off valve 61.

The opening rate of the A/F valve 41 is originally set by the control section 10. With the bypass supply path 6 being communicated, however, this opening rate is not necessarily suitable when the load on the engine 4 is changed or when the engine 4 is started, because a sudden change in the excess air ratio results in engine stall. Hence, when the load on the engine 4 is changed or when the engine 4 is started, the on/off valve 61 is closed to resume the biomass gas supply through the A/F valve 41. Later, if the operating state is still on the lean side out of the purification window W even with the A/F valve 41 being fully open, the on/off valve 61 is opened again to provide communication with the bypass supply path 6.

Since the control section 10 can control the operation of the biomass gas-fired engine system 1 in the above-mentioned manner, it is possible to prevent the A/F valve 41 from being fully open. Eventually, it is possible to avoid a lack of combustion calories of the biomass gas, to prevent the operating state from being on the lean side out of the purification window W, and to avoid an increase in NOx generation.

Besides, when the load or the rotating speed of the engine 4 is changed, the on/off valve 61 is closed to resume the biomass gas supply through the A/F valve 41 prior to the change in the load or the rotating speed of the engine 4. Such a control can prevent a sudden change in the air-fuel ratio and can avoid engine stall.

### - Example 3 -

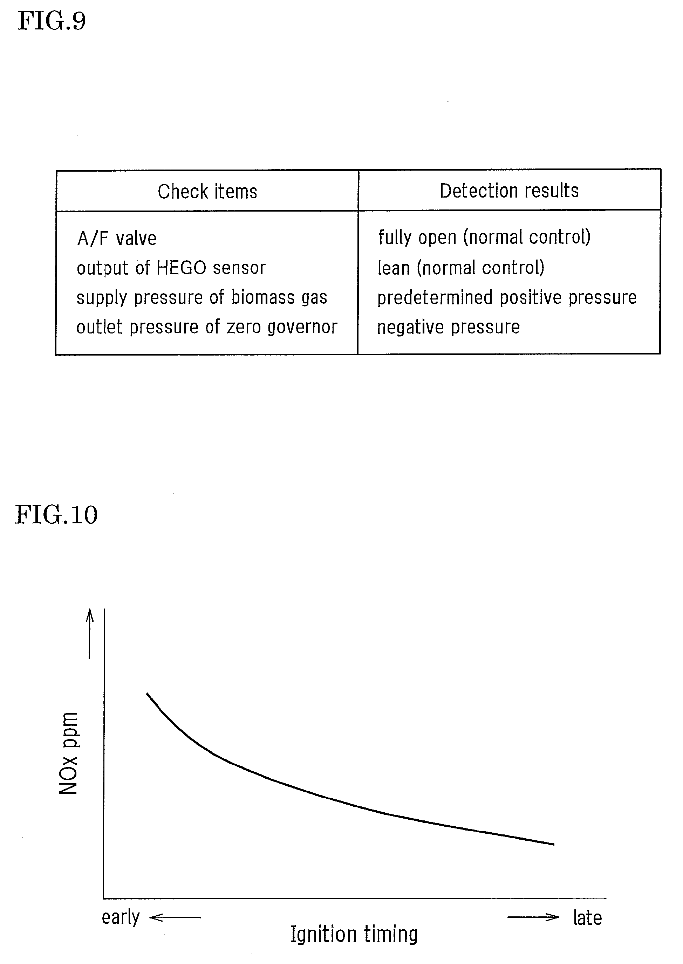

FIG. 9 shows check items for malfunction of the zero governor 30 to be detected by the control section 10.

As described above, the control section 10 can provide control for avoiding a lack of combustion calories of the biomass gas, in which case the operating state is on the lean side out of the purification window W to produce an increased amount of NOx. Such a control is possible on the premise that the zero governor 30 operates normally. If the zero governor 30 fails, the operating state on the lean side is assumed to be caused by malfunction of the zero governor 30, rather than by a lack of combustion calories of the biomass gas.

Hence, in the case where the pre-HEGO sensor 13, the post-HEGO sensor 14 or the UEGO sensor 15 detects that the A/F valve 41 is fully open and that the operating state is on the lean side out of the purification window W, the control section 10 is arranged to check whether the supply pressure of the biomass gas fed from the upstream side of the zero governor 30 is at a predetermined level and whether the pressure on the downstream side of the zero governor 30 is negative or not, before the control section 10 provides control as mentioned in Examples 1 and 2. These pressures can be measured by the pressure sensors 16, 17 provided upstream and downstream of the zero governor 30 in the gas supply path 31.

In the case where the pre-HEGO sensor 13, the post-HEGO sensor 14 or the UEGO sensor 15 detects that the A/F valve 41 is fully open and that the operating state is on the lean side out of the purification window W, and also in the case where the pressure sensors 16, 17 detect that the supply pressure of the biomass gas fed from the upstream side of the zero governor 30 is at a predetermined level and that the pressure on the downstream side of the zero governor 30 is negative, then the control section 10 confirms malfunction of the zero governor 30 and gives an alarm. This alarm may be a sound alarm or flashing light, or may be an alarm signal to be sent somewhere. In conjunction with an alarm, the control section 10 may be arranged to switch to a stop program for stopping the engine 4.

This arrangement can detect malfunction of the zero governor 30 before the control section 10 provides control as described in Examples 1 and 2, thereby preventing a control failure which could otherwise occur when the control section 10 provides control as described in Examples 1 and 2.

In the above-mentioned embodiments, the control section 10 is arranged to detect the full-open state of the A/F valve 41. Instead, the pre-HEGO sensor 13, the post-HEGO sensor 14, or the UEGO sensor 15 may detect that the operating state is on the lean side out of the purification window W before the A/F valve 41 is fully opened. In this case, the control section 10 may be arranged to check whether the supply pressure of the biomass gas fed from the upstream side of the zero governor 30 is at a predetermined level and whether the pressure on the downstream side of the zero governor 30 is negative or not, at the time when the opening rate of the A/F valve 41 exceeds a predetermined value and when the pre-HEGO sensor 13, the post-HEGO sensor 14, or the UEGO sensor 15 detects that the operating state is on the lean side out of the purification window W.

### - Example 4 -

FIG. 10 shows the relationship between the amount of NOx and the ignition timing of the engine 4 in the biomass gas-fired engine 1 system, when the operating state is on the lean side out of the purification window W even with the A/F valve 41 being fully open. Specifically, regarding the case where the operating state is on the lean side out of the purification window W even with the A/F valve 41 being fully open, this graph explains the possibility of reducing the generation of NOx by retarding the ignition timing of the engine 4. This information is inputted in the control section 10.

Normally, the A/F valve 41 is set at a position for the best fuel efficiency, rather than at a position for the least NOx generation. Therefore, the amount of NOx generation may increase, even with the A/F valve 41 being fully open, when the combustion calories of the biomass gas supplied from the gasification furnace 2 drop significantly and the operating state is on the lean side out of the purification window W. In this case, the control section 10 retards the ignition timing of the engine 4, based on FIG. 10, in such a manner as to reduce the generation of NOx. Thereby, it is possible to control the operating state of the engine 4 within the purification window W, and to prevent an increase in NOx generation which occurs when the operating state is on the lean side out of the purification window W due to a lack of biomass gas.

The control section 10 provides control for returning the retarded ignition timing to the original ignition timing, if the operating state of the engine 4 recovers from the lean side to such an extent that the A/F valve 41 no longer needs to be fully open, and if the operating state of the engine 4 can be kept within the purification window W.

Additionally, prior to the above-mentioned control, the control section 10 may provide control for detecting malfunction of the zero governor 30 as described in Example 3.

### - Example 5 -

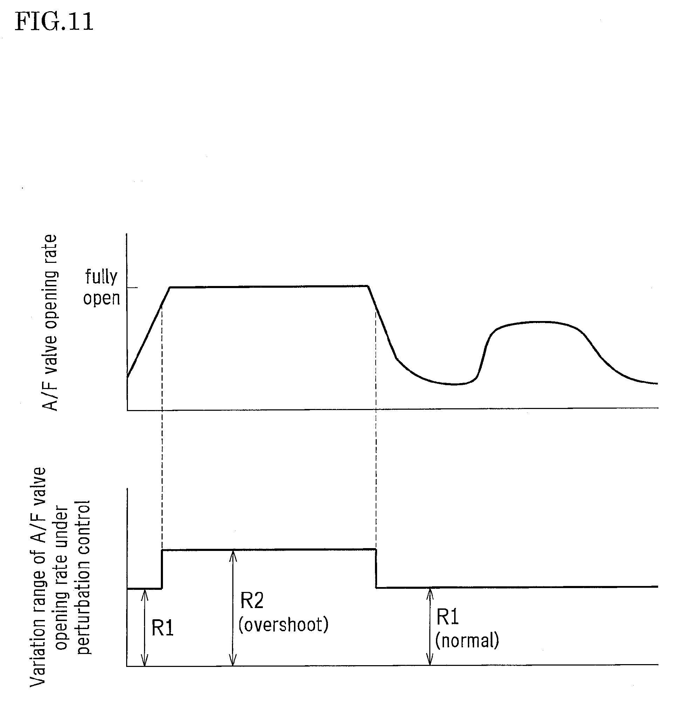

FIG. 11 shows the relationship between a time-course change of the valve opening rate while the A/F valve 41 is under perturbation control and the variation range of the opening rate of the A/F valve 41, during the operation of the engine 4 in the biomass gas-fired engine system 1.

Namely, in the case where the combustion calories of the biomass gas drop significantly and where the A/F valve 41 is fully open or is almost fully open, the control section 10 changes a variation range R1 of the opening rate of the A/F valve 41 which is under perturbation control to a variation range R2 of the opening rate which is greater by a predetermined degree than the normal state. This change can improve the control speed of the air-fuel ratio and can reduce an overshoot time of the A/F valve 41. As a result, it is possible to decrease the time during which the operating state is on the lean side out of the purification window W due to a lack of biomass gas and during which the amount of NOx generation increases, and it is thereby possible to lower the exhaust gas concentration.

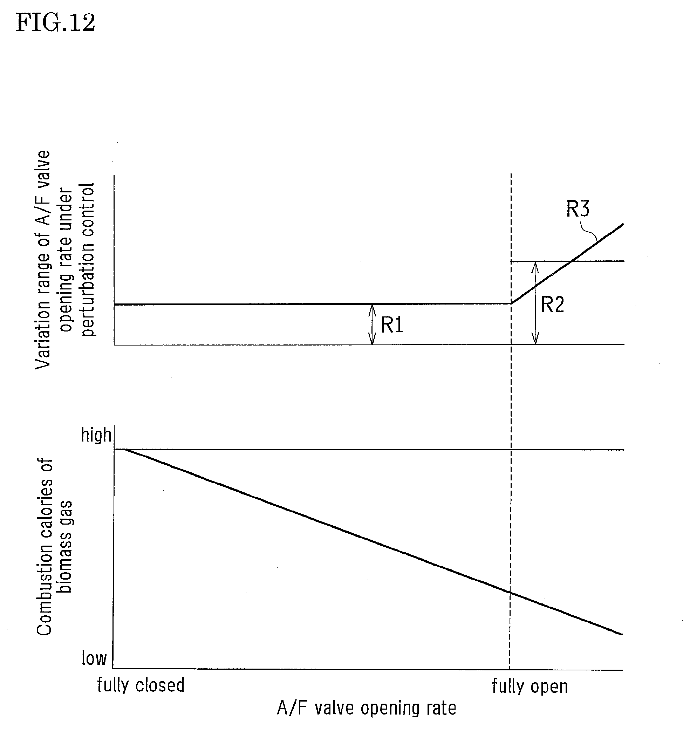

In FIG. 11, the control section 10 allows the pre-HEGO sensor 13 and the post-HEGO sensor 14 having Z characteristics to detect whether the A/F valve 41 is fully open or is almost fully open. After the A/F valve 41 is fully open, however, these sensors cannot detect the degree of overshoot. Therefore, the variation range R2 of the opening rate of the A/F valve 41 is set at a fixed value which is greater by a predetermined value than the variation range R1 of the normal opening rate. Alternatively, the control section 10 may allow the UEGO sensor 15, instead of the pre-HEGO sensor 13 and the post-HEGO sensor 14, to detect whether the A/F valve 41 is fully open or is almost fully open. As shown in FIG. 12, the UEGO sensor 15 can detect the degree of overshoot. Therefore, it is possible to determine the variation range R3 of the opening rate of the A/F valve 41, based on the detection result by the UEGO sensor 15, and thereby to effect more accurate control.

After the overshoot is cleared up and the fully-open A/F valve 41 is ready to be closed, the control section 10 provides control for bringing the opening rate to a predetermined rate (e.g. about 80%) and thereafter to the variation range R1 of the normal opening rate.

During the overshoot, the variation ranges R2, R3 of the opening rate of the A/F valve 41 may be changed either by a jump for sharply changing the valve opening rate or by a ramp for gradually changing the valve opening rate for minute adjustment, or by both. The variation range R3 can be calculated, for example, as R3 = [R1 x (detection result by the UEGO sensor 15 - target value of the UEGO sensor 15) / target value in perturbation control].

Additionally, prior to the above-mentioned control, the control section 10 may provide control for detecting malfunction of the zero governor 30 as described in Example 3.

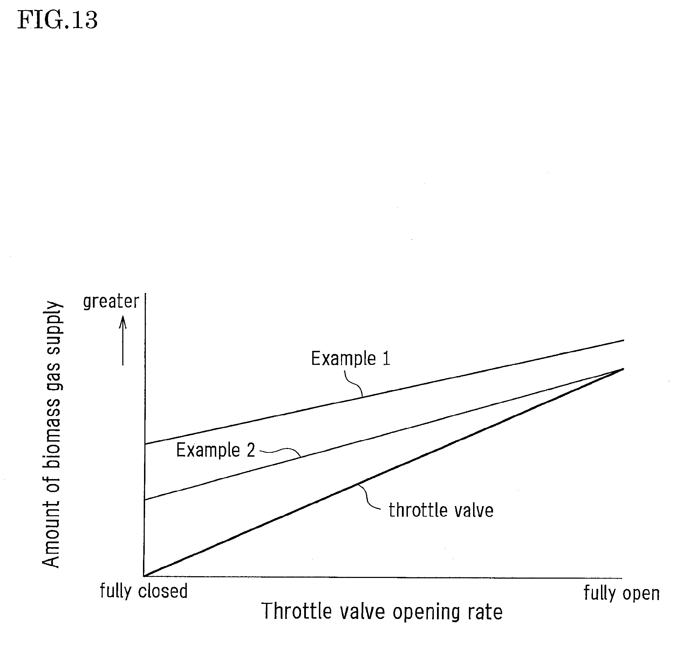

The modes of control as described in Examples 1 to 5 may be effected singly or in combination, or may be optionally selected in accordance with the operating state. For example, as shown in FIG. 13, the control described in Example 1 can increase biomass gas in the entire opening rate region of the throttle valve 44. In contrast, according to the control described in Example 2, the effect of increasing biomass gas is sufficient in a region where the opening rate of the throttle valve 44 is small, but the effect of increasing biomass gas declines gradually as the opening rate of the throttle valve 44 gets greater. Therefore, depending on the operating state at the particular moment, the control section 10 may select a suitable control from Example 1 or 2.

### - Example 6 -

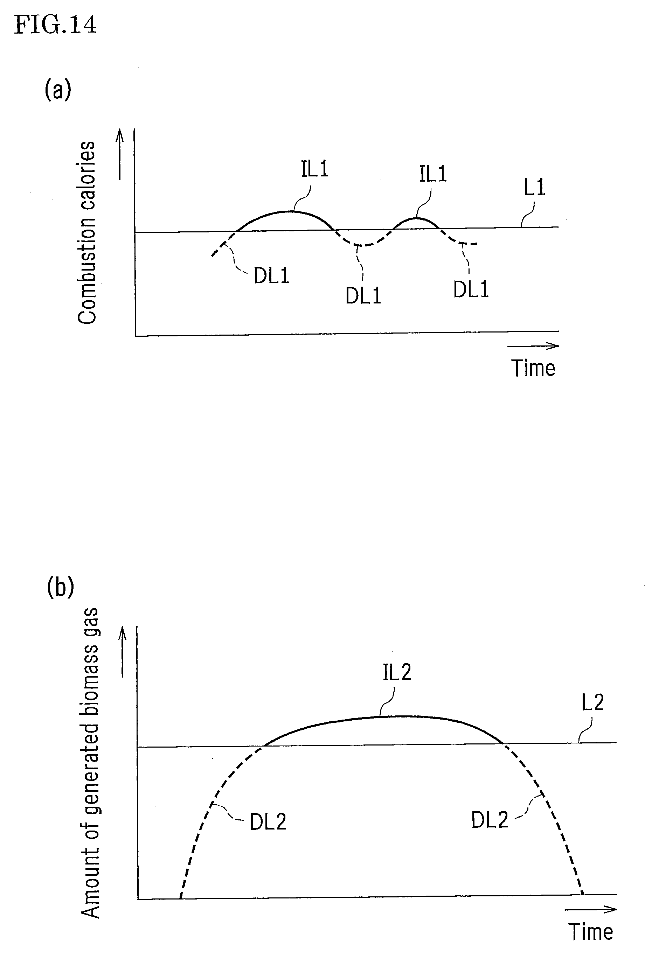

FIG. 14 shows time-course changes of the load control relative to the change in the combustion calories of biomass gas and the change in the amount of generated biomass gas.

Similar to the biomass gas-fired engine system 1 in Example 1, the biomass gas-fired engine system 1 in Example 6 normally allows the engine to keep running on biomass gas from the gasification furnace 2, in the range of the purification window W with minimum generation of CO, NOx, and hydrocarbons. As shown in FIG. 14, the control section 10 maintains the operation in such a manner as to satisfy the required load L1 based on the combustion calories of the biomass gas and the required load L2 based on the amount of generated biomass gas.

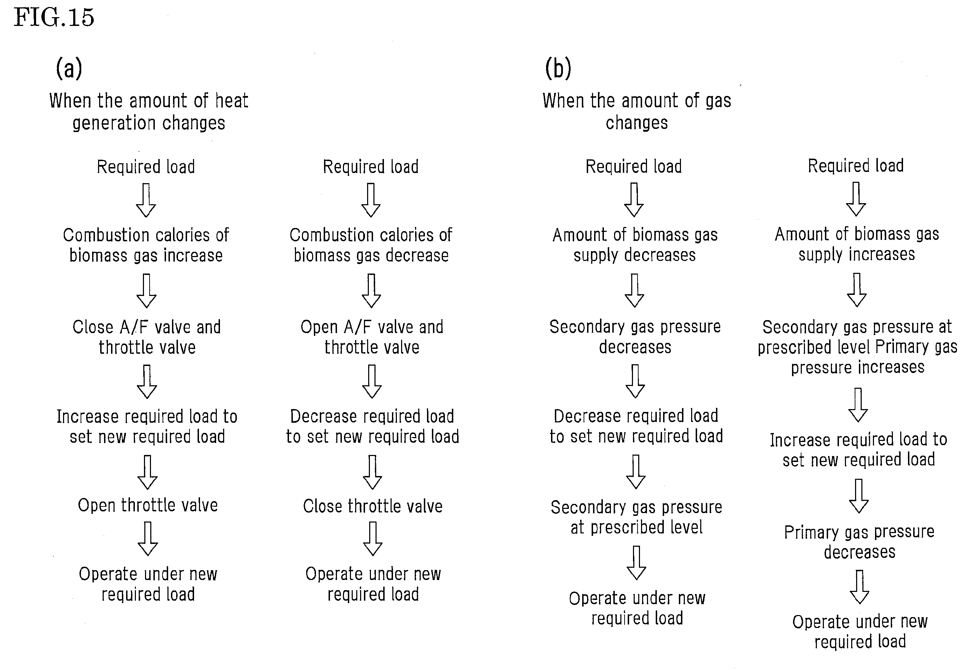

For example, FIG. 15(a) describes a case where the combustion calories of the biomass gas supplied from the gasification furnace 2 rise significantly. In this case, even if the A/F valve 41 and the throttle valve 44 are controlled in closing directions, the concentration of the biomass gas having increased combustion calories gets so high as to bring the operating state on the rich side out of the purification window W. Hence, when the A/F valve 41 and the throttle valve 44 are controlled in closing directions, the control section 10 increases the required load L1 to set a new required load IL1. Resetting of the required load allows the throttle valve 44 to be opened, so that the operation can continue to satisfy the new increased required load IL1.

FIG. 15(a) also describes a case where the combustion calories of the biomass gas supplied from the gasification furnace 2 drop significantly. In this case, even if the A/F valve 41 and the throttle valve 44 are controlled to open fully, the amount of biomass gas having decreased combustion calories is deficient and causes the operating state to be on the lean side out of the purification window W. Hence, when the A/F valve 41 and the throttle valve 44 are controlled to open fully, the control section 10 decreases the required load L1 to set a new required load DL1. Resetting of the required load allows the throttle valve 44 to be closed, so that the operation can continue to satisfy the new decreased required load DL1.

The control as shown in FIG. 15(a) and described above can follow the change in the combustion calories of the biomass gas as shown in FIG. 14(a), thereby reducing the amount of waste biomass gas and ensuring an efficient operation.

FIG. 15(b) describes a case where the amount of biomass gas supplied from the gasification furnace 2 drops significantly. In this case, both the primary gas pressure of the biomass gas supplied to the zero governor 30 and the secondary gas pressure of the biomass gas coming out of the zero governor 30 decrease, so that biomass gas cannot be supplied in a sufficient amount to satisfy the required load L2. Hence, if the pressure sensors 16, 17 for measuring the primary gas pressure and the secondary gas pressure cannot detect predetermined levels of pressure, the control section 10 sets a new required load DL2 in which the amount of consumed biomass gas is decreased in comparison with the amount under the required load L2. By resetting the required load, it is possible to raise the primary gas pressure of the biomass gas supplied to the zero governor 30, and to keep the secondary gas pressure at a prescribed level, so that the operation can continue to satisfy the new decreased required load DL2.

FIG. 15(b) also describes a case where the amount of biomass gas supplied from the gasification furnace 2 rises significantly. In this case, the primary gas pressure of the biomass gas supplied to the zero governor 30 rises, but the secondary gas pressure of the biomass gas coming out of the zero governor 30 remains at a prescribed level. Then, even if the biomass gas is consumed in an amount to satisfy the required load L2, biomass gas cannot be consumed completely and remains as excess gas which has to be disposed of. To avoid this situation, if the primary gas pressure of the biomass gas gets higher than a predetermined value, the control section 10 sets a new increased required load IL2 in which the amount of consumed biomass gas is increased in comparison with the amount under the required load L2. By resetting the required load, it is possible to increase the amount of consumed biomass gas, and to reduce the primary gas pressure, so that the operation can continue to satisfy the new increased required load IL2.

The control as shown in FIG. 15(b) and described above can follow the change in the amount of generated biomass gas as shown in FIG. 14(b), thereby reducing the amount of waste biomass gas and ensuring an efficient operation.

Additionally, the change in the combustion calories of the biomass gas as shown in FIG. 14(a) coincides with the change in the amount of generated biomass gas as shown in FIG. 14(b). Hence, the controls shown in FIGs. 15(a) and 15(b) are always effected simultaneously by giving feedback while the biomass gas-fired engine system 1 is in operation.

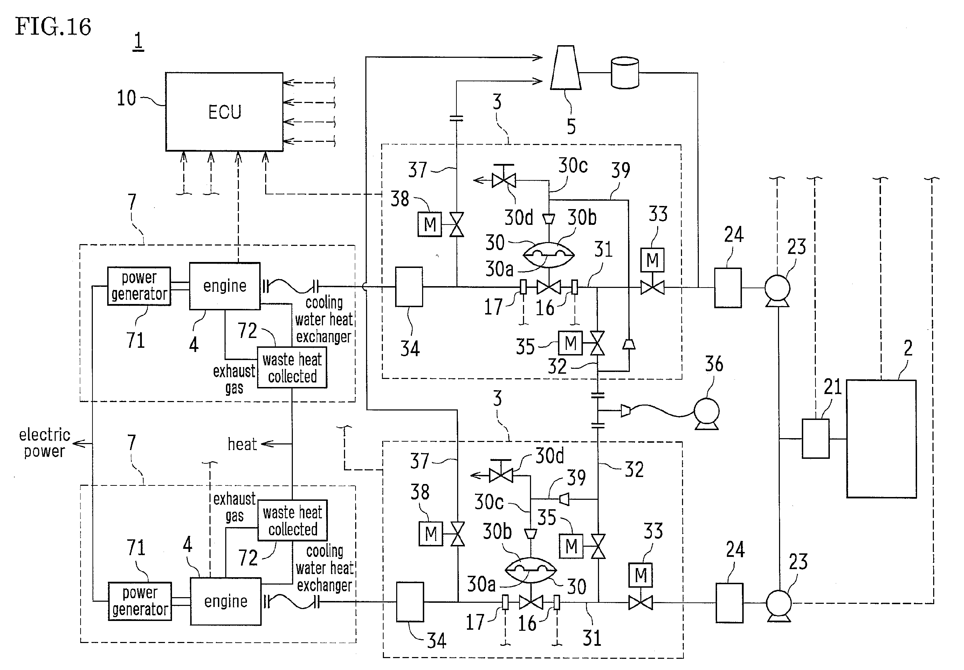

The thus controlled biomass gas-fired engine system 1 is employed as a drive source of a cogeneration system 7. As shown in FIG. 16, the cogeneration system 7 is configured to drive a power generator 71 by using the engine 4 of the biomass gas-fired engine system 1 as a drive source, to collect waste heat from both the exhaust gas and the cooling water heat exchanger of the engine 4, to accumulate the waste heat in a hot water tank 72, and to utilize the electric power and hot water. According to the above-described controls, the electric power obtained in the cogeneration system 7 is overgenerated at the excess part E and is undergenerated at the shortage part S relative to the amount of generated power G. Hence, the cogeneration system 7 is controlled by the control section 10 in such a manner as to store or sell electric power at the excess part E, and to buy or charge electric power at the shortage part S to offset the shortage.

The thus controlled cogeneration system 7 can utilize electric power effectively, without wasting the biomass gas generated in the gasification furnace 2.

It should be understood that FIGs. 14 and 17 are merely given as exemplary situations for describing the controls, and should not be taken in a limitative manner.

The biomass gas-fired engine systems 1 as described in the above Examples are not only suitable as a drive source of the cogeneration system 7, but also suitable as a drive source of a gas heat pump system (not shown).

The gasification furnace 2 is composed of a furnace for pyrolysis of biomass materials such as wood chips and chaff. However, pyrolysis in the gasification furnace 2 should not be limited to wood materials, but may also include other biomass materials such as garbage and plastic waste. Further, the gasification furnace 2 for generation of biomass gas should not be limited to a pyrolysis-based furnace, but may be a fermentation-based furnace which ferments raw garbage, sewage water, human/animal waste, and the like. The fermentation-based gasification furnace 2, in which the temperature rises due to fermentation, may also use a scrubber for cooling biomass gas. Namely, similar to the biomass gas obtained in the pyrolysis-based gasification furnace 2, the biomass gas obtained in the fermentation-based gasification furnace 2 is very humid and is likely to give a tarry residue. Therefore, the present invention is also effective for the fermentation-based gasification furnace 2.

### [Description of the Reference Numerals]

- 1: biomass gas-fired engine system
- 10: control section
- 13: pre-HEGO sensor
- 14: post-HEGO sensor
- 15: UEGO sensor
- 16, 17: pressure sensors
- 2: gasification furnace
- 3: zero governor unit
- 30: zero governor
- 30a: diaphragm
- 30b: actuator
- 30c: atmospheric pressure release path (air outlet)
- 30d: pressure regulating valve (variable valve)
- 31: gas supply path
- 32: air supply path
- 4: engine
- 41: A/F valve
- 44: throttle valve
- 49: starter motor
- 6: bypass supply path
- 61: on/off valve
- W: purification window
- R1: variation range
- R2: variation range
- R3: variation range
- L1: required load
- L2: required load

## Claims

1. A biomass gas-fired engine system (1) **characterized in that** it is configured:
to generate biomass gas in a gasification furnace (2), and to supply the biomass gas to an engine (4) through a zero governor unit (3);
to connect the zero governor unit (3) with an air supply path (32) for purging residual gas out of a zero governor (30) with air;
to purge residual gas out of the zero governor (30) with air, after supply of the biomass gas from the gasification furnace (2) has ended; and
is equipped with a control section which provides control for extending a normal operation time of a starter motor (49) by a time to recharge biomass gas in an amount corresponding to an amount of residual gas expelled by the air purge, only when the engine (4) is started for a first time after the gasification furnace (2) starts to supply the biomass gas.

2. The biomass gas-fired engine system (1) according to claim 1, wherein
the control section (10) is configured to rotate the starter motor (49) at a valve opening rate which is greater by a predetermined rate than a start opening rate, during an initial period of rotation of the starter motor (49) when the engine (4) is started for the first time after the gasification furnace (2) starts to supply the biomass gas, and
the control section (10) is also configured to return the valve opening rate to the start opening rate after the biomass gas is recharged into the zero governor (30) and a gas piping which have been purged with air.

3. The biomass gas-fired engine system (1) according to claim 2, wherein
the valve opening rate which is greater by a predetermined rate is a fully open state.

4. The biomass gas-fired engine system (1) according to claim 1, wherein
a pressure sensor (16) is provided in a gas supply path which leads out of the gasification furnace (2), and
the control section (10) is configured to increase or decrease an engine load in accordance with a change in a biomass gas pressure.

5. The biomass gas-fired engine system (1) according to claim 1, wherein
an heated exhaust gas oxygen sensor (13,14) or an universal exhaust gas oxygen sensor (15) is provided in an engine exhaust path (45), and
the control section (10) is configured to increase or decrease an engine load in accordance with a change in combustion calories of the biomass gas.

6. The biomass gas-fired engine system (1) according to claim 1, wherein
the biomass gas is supplied from the zero governor (30) to an A/F valve (41) of the engine (4),
an air outlet (30c) which opens to an actuator (30b) on a diaphragm of the zero governor (30) is equipped with a variable valve (30d), and is also equipped with an air supply path which can apply air pressure to the actuator (30b), and
in the case where the opening rate of the A/F valve (41) is greater by a predetermined rate than the opening rate corresponding to an excess air ratio associated with a preset load, the control section (10) is configured to apply air pressure from the air supply path (32) to the actuator (30b), and is also configured to regulate the air pressure by the variable valve (30d) in such a manner as to increase a supply pressure of the biomass gas supplied to the A/F valve (41).

7. The biomass gas-fired engine system (1) according to claim 1, wherein
the biomass gas is supplied from the zero governor (30) to an A/F valve (41) and a throttle (44) of the engine (4),
a bypass path for the biomass gas is provided between an upstream side of the A/F valve (41) and a downstream side of the throttle (44), and
in the case where the opening rate of the A/F valve (41) is greater by a predetermined rate than the opening rate corresponding to an excess air ratio associated with a preset load, the control section (10) is configured to open a valve provided in the bypass path and to supply the biomass gas directly to the downstream side of the throttle (44).

8. The biomass gas-fired engine system (1) according to claim 1, wherein
the biomass gas is supplied from the zero governor (30) to an A/F valve (41) of the engine (4),
the control section (10) is configured to detects an opening rate of the A/F valve (41), to detect whether a supply pressure of the biomass gas is normal or not, to detect an outlet pressure of the zero governor (30), and to detect an output from an universal exhaust gas oxygen sensor (15) or an heated exhaust gas oxygen sensor (13,14) for exhaust gas, and
in the case where the opening rate of the A/F valve (41) is greater by a predetermined rate than the opening rate corresponding to an excess air ratio associated with a preset load, the control section (10) is configured to detects malfunction of the zero governor (30) if the supply pressure of the biomass gas is normal, if the outlet pressure of the zero governor (30) is negative, and if the exhaust gas is lean.

9. The biomass gas-fired engine system (1) according to claim 1, wherein
the biomass gas is supplied from the zero governor (30) to an A/F valve (41) of the engine (4), and
in the case where the opening rate of the A/F valve (41) is greater by a predetermined rate than the opening rate corresponding to an excess air ratio associated with a preset load, and also where an operating state of the engine (4) is on a lean side out of a purification window (W), the control section (10) provides control for retarding an ignition timing and thereby keeping the operating state of the engine (4) within the purification window (W).

10. The biomass gas-fired engine system (1) according to claim 1, wherein
the biomass gas is supplied from the zero governor (30) to an A/F valve (41) of the engine (4),
the control section (10) is configured to provide perturbation control by switching the A/F valve (41) between a lean side and a rich side, and
in the case where the opening rate of the A/F valve (41) is greater by a predetermined rate than the opening rate corresponding to an excess air ratio associated with a preset load, the control section (10) is configured to increase a variation range for the perturbation control.

## Patentansprüche

1. Ein Biomassegas-befeuertes Motorsystem (1), **dadurch gekennzeichnet, dass** es konfiguriert ist:
Biomassegas in einer Vergaserfeuerung (2) zu erzeugen, und das Biomassegas einem Motor (4) durch eine Nulldruckregler-Einheit (3) zuzuführen;
die Nulldruckregler-Einheit (3) mit einem Luftzufuhrweg (32) zu verbinden, um restliches Gas mit Luft aus einem Nulldruckregler (30) zu spülen;
restliches Gas mit Luft aus dem Nulldruckregler (30) zu spülen, nachdem das Zuführen des Biomassegases von der Vergaserfeuerung (2) geendet hat; und
mit einer Kontrollsektion (10) ausgestattet ist, welche eine Kontrolle zum Verlängern einer normalen Betriebszeit eines Anlassers (49) um eine Zeit, Biomassegas nachzuladen, in einer Menge entsprechend einer Menge restlichen Gases, das durch die Spülluft ausgestoßen wird, ermöglicht, nur wenn der Motor (4) ein erstes Mal gestartet wird, nachdem die Vergaserfeuerung (2) beginnt, das Biomassegas zuzuführen.

2. Das Biomassegas-befeuerte Motorsystem (1) nach Anspruch 1, worin
die Kontrollsektion (10) konfiguriert ist, den Anlasser (49) bei einer Ventilöffnungsrate zu drehen, welche um eine vorgegebene Rate größer ist als eine Startöffnungsrate, während einer Anlaufzeit der Drehung des Anlassers (49), wenn der Motor (4) das erste Mal gestartet wird, nachdem die Vergaserfeuerung (2) beginnt, das Biomassegas zuzuführen, und
die Kontrollsektion (10) auch konfiguriert ist, die Ventilöffnungsrate auf die Startöffnungsrate zurückzuführen, nachdem das Biomassegas in den Nulldruckregler (30) nachgeladen ist und Gasrohrleitungen, welche mit Luft gespült wurden.

3. Das Biomassegas-befeuerte Motorsystem (1) nach Anspruch 2, worin
die Ventilöffnungsrate, welche um eine vorgegebene Rate größer ist, ein vollständig geöffneter Zustand ist.

4. Das Biomassegas-befeuerte Motorsystem (1) nach Anspruch 1, worin
ein Drucksensor (16) in einem Gaszufuhrweg angeordnet ist, welcher aus der Vergaserfeuerung (2) herausführt, und
die Kontrollsektion (10) konfiguriert ist, eine Motorlast in Übereinstimmung mit einer Änderung in einem Biomassegasdruck zu erhöhen oder zu erniedrigen.

5. Das Biomassegas-befeuerte Motorsystem (1) nach Anspruch 1, worin
ein beheizter Abgassauerstoffsensor (13, 14) oder ein universaler Abgassauerstoffsensor (15) in einem Motorabgasweg (45) angeordnet ist, und
die Kontrollsektion (10) konfiguriert ist, die Motorlast in Übereinstimmung mit einer Änderung der Verbrennungskalorien des Biomassegases zu erhöhen oder zu erniedrigen.

6. Das Biomassegas-befeuerte Motorsystem (1) nach Anspruch 1, worin
das Biomassegas von dem Nulldruckregler (30) einem A/F Ventil (41) des Motors (4) zugeführt wird,
ein Luftauslass (30c), welcher sich zu einem Aktuator (30b) auf einem Diaphragma des Nulldruckreglers (30) hin öffnet, ausgestattet ist mit einem variablen Ventil (30d), und außerdem ausgestattet ist mit einem Luftzufuhrweg (32), welcher Luftdruck an den Aktuator (30b) anlegen kann, und
in dem Fall, wo die Öffnungsrate des A/F Ventils (41) um eine vorgegebene Rate größer ist als die Öffnungsrate korrespondierend zu einem Überschuss-Luft-Verhältnis assoziiert mit einer vorgegebenen Last, die Kontrollsektion (10) konfiguriert ist, Luftdruck von dem Luftzufuhrweg (32) an den Aktuator (30b) anzulegen, und außerdem konfiguriert ist, den Luftdruck mittels des variablen Ventils (30d) zu regulieren, derart, einen Zufuhrdruck des Biomassegases zugeführt zu dem A/F Ventil (41) zu erhöhen.

7. Das Biomassegas-befeuerte Motorsystem (1) nach Anspruch 1, worin
das Biomassegas von dem Nulldruckregler (30) einem A/F Ventil (41) und einer Drosselklappe (44) des Motors (4) zugeführt wird,
ein Bypassweg für das Biomassegas zwischen einer stromaufwärtigen Seite des A/F Ventils (41) und einer stromabwärtigen Seite der Drosselklappe (44) angeordnet ist, und
in dem Fall, wo die Öffnungsrate des A/F Ventils (41) um eine vorgegebene Rate größer ist als die Öffnungsrate korrespondierend zu einem Überschuss-Luftverhältnis assoziiert mit einer vorgegebenen Last, die Kontrollsektion (10) konfiguriert ist, ein Ventil, angeordnet in dem Bypassweg, zu öffnen und Biomassegas direkt der stromabwärtigen Seite der Drosselklappe (44) zuzuführen.

8. Das Biomassegas-befeuerte Motorsystem (1) nach Anspruch 1, worin
das Biomassegas von dem Nulldruckregler (30) einem A/F Ventil (41) des Motors (4) zugeführt wird,
die Kontrollsektion (10) konfiguriert ist, eine Öffnungsrate des A/F Ventils (41) zu detektieren, zu detektieren, ob ein Zufuhrdruck des Biomassegases normal ist oder nicht, einen Auslassdruck des Nulldruckreglers (30) zu detektieren, und eine Ausgabe eines universalen Abgassauerstoffsensors (15) oder eines beheizten Abgassauerstoffsensors (13, 14) für Abgas zu detektieren, und
in dem Fall, wo die Öffnungsrate des A/F Ventils (41) um eine vorgegebene Rate größer ist als die Öffnungsrate korrespondierend zu einem Überschuss-Luftverhältnis assoziiert mit einer vorgegebenen Last, die Kontrollsektion (10) konfiguriert ist, eine Fehlfunktion des Nulldruckreglers (30) zu erkennen, falls der Zufuhrdruck des Biomassegases normal ist, falls der Auslassdruck des Nulldruckreglers (30) negativ ist, und falls das Abgas mager ist.

9. Das Biomassegas-befeuerte Motorsystem (1) nach Anspruch 1, worin
das Biomassegas von dem Nulldruckregler (30) einem A/F Ventil (41) des Motors (4) zugeführt wird, und
in dem Fall, wo die Öffnungsrate des A/F Ventils (41) um eine vorgegebene Rate größer ist als die Öffnungsrate korrespondierend zu einem Überschuss-Luftverhältnis assoziiert mit einer vorgegebenen Last, und außerdem, wo ein Betriebszustand des Motors (4) auf einer mageren Seite außerhalb eines Reinigungsfensters (W) ist, die Kontrollsektion (10) eine Kontrolle ermöglicht, eine Zündterminierung zu verzögern und dadurch den Betriebszustand des Motors (4) im Reinigungsfenster (W) zu halten.

10. Das Biomassegas-befeuerte Motorsystem (1) nach Anspruch 1, worin
das Biomassegas von dem Nulldruckregler (30) einem A/F Ventil (41) des Motors (4) zugeführt wird,
die Kontrollsektion (10) konfiguriert ist, Perturbationskontrolle durch das Umschalten des A/F Ventils (41) zwischen einer mageren und einer fetten Seite zu ermöglichen, und
in dem Fall, wo die Öffnungsrate des A/F Ventils (41) um eine vorgegebene Rate größer ist als die Öffnungsrate korrespondierend zu einem Überschuss-Luftverhältnis assoziiert mit einer vorgegebenen Last, die Kontrollsektion (10) konfiguriert ist, einen Variationsbereich für die Perturbationskontrolle zu vergrößern.

## Revendications

1. Un moteur système à gaz de biomasse (1) **caractérisé en ce qu'**il est configuré:
de générer gaz de biomasse dans un four de gazage (2), et de provisionner le gaz de biomasse à un moteur (4) par un unité zéro governor (3);
de connecter l'unité zéro governor (3) à un passage de provisionnement d'air (32) afin de purger le gaz résiduaire dehors du zéro governor (30) avec air;
de purger gaz résiduaire dehors du zéro governor (30) avec air, après le provisionnement de gaz de biomasse provenant de four de gazage (2) est fini; et
est équipé d'une section contrôle (10) laquelle provisionne de contrôle afin d'agrandir un temps normale de fonctionnement d'un moteur starter (49) par un temps afin de recharger gaz de biomasse dans une quantité correspondant à une quantité de gaz de biomasse expulsée par purger avec d'air, seulement quand le moteur (4) est demarré une première fois après le four de gazage (2) commence de fournir le gaz de biomasse.

2. Le moteur système à gaz de biomasse (1) selon la revendication 1, dans lequel
la section contrôle (10) est configurée afin de tourner le moteur starter (49) à un degré d'ouverture de la valve qui est plus grand par un degré predeterminé que le degré d'ouverture de démarrage, pendant une période initiale de rotation de moteur starter (49) quand le moteur (4) est demarré une première fois après le four de gazage (2) commence à fournir le gaz de biomasse, et
la section contrôle (10) est ainsi configurée pour retourner le degré d'ouverture de la valve au degré d'ouverture après le gaz de biomasse est rechargé dans le zéro governor (30) et un tuyau à gaz qui sont purgés à air.

3. Le moteur système à gaz de biomasse (1) selon la revendication 2, dans lequel
le degré d'ouverture de la valve qui est plus grand par un degré predeterminé est un état complètement ouvert.

4. Le moteur système à gaz de biomasse (1) selon la revendication 1, dans lequel
un capteur presseur (16) est provisionné dans un passage de provisionnement de gaz qui conduit dehors de four de gazage (2), et
la section contrôle (10) est configuré pour élever où diminuer un chargement du moteur conformément à une changement de pression de gaz de biomasse.

5. Le moteur système à gaz de biomasse (1) selon la revendication 1, dans lequel
un capteur gaz d'échappement oxygène chauffé (13,14) où un capteur universel oxygène gaz d'échappement (15) est fourni dans un passage d'échappement de moteur (45), et
la section contrôle (10) est configurée pour élever où diminuer un chargement dü moteur conformément à une changement chaleur de combustion du gaz de biomasse.

6. Le moteur système à gaz de biomasse (1) selon la revendication 1, dans lequel
le gaz de biomasse est fourni par le zéro governor (30) à un valve A/F (41) de moteur (4),
un sortie d'air (30c) qui s'ouvre à un actuateur (30b) sur un diaphragme de zéro governor (30) est équipé d'un valve variable (30d), et est aussi équipé d'un passage de provisionnement d'air (32) qui est capable d'appliquer pression d'air à l'actuateur (30b), et
dans le cas où le degré d'ouverture de valve A/F (41) est plus grand par un degré predeterminée que le degré d'ouverture correspondant à un excès air rapport associé à un charge predeterminée, la section contrôle (10) est configurée d'appliquer pression de l'air provenant de passage de provisionnement d'air (32) à l'actuateur (30b), et est aussi configuré de régler le pression d'air par la valve variable (30d) dans une manière afin d'augmenter le pression de provisionnement de gaz de biomasse supplié à la valve A/F (41).

7. Le moteur système à gaz de biomasse (1) selon la revendication 1, dans lequel
le gaz de biomasse est fourni par le zéro governor (30) à un valve A/F (41) et un accélérateur (44) du moteur (4),
un passage dérivation pour le gaz de biomasse est provisionné entre un côté en remontant le fleuve de valve A/F (41) et un côté en descendant le courant d'accélérateur (44), et
dans le cas où le degré d'ouverture de valve A/F (41) est plus grand par un degré predeterminée que le degré d'ouverture correspondant à un excess air rapport associé à un charge predéterminé, la section contrôle (10) est configurée d'ouvrir un valve fourni dans le dérivation et de fournir le gaz de biomasse directement et de fournir le gaz de biomasse directement à la côté en descendant le courant d'accélérateur (44).

8. Le moteur système à gaz de biomasse (1) selon la revendication 1, dans lequel
le gaz de biomasse est fourni par le zéro governor (30) à un valve A/F (41) du moteur (4),
la section contrôle (10) est configuré de détecter une degré d'ouverture de valve A/F (41), afin de détecter si un pression de provisionnement de gaz de biomasse est normal où pas, afin de détecter un pression à la sortie de zéro governor (30), et afin de détecter un output d'un capteur universel gaz d'échappement oxygène (15) où un capteur chauffé d'oxygène de gaz d'échappement (13,14), et
dans le cas où le degré de ouverture de valve A/F (41) est plus grand par un degré prédeterminée par rapport au degré de départ correspondant à un rapport excès air associé avec un charge predeterminé, la section contrôle (10) est configurée de detecter un erreur de fonctionnement de zéro governor (30) si le pression de provisionnement de gaz de biomasse est normale, si la pression à la sortie de zéro governor (30) est negative, et si le gaz d'échappement est maigre.

9. Le moteur système à gaz de biomasse (1) selon la revendication 1, dans lequel
le gaz de biomasse est fourni par le zéro governor (30) à un valve A/F (41) du moteur (4), et
dans le cas où le degré d'ouverture de valve A/F (41) est plus grand par un degré prédeterminé par rapport au degré d'ouverture correspondant à un rapport excès air associé à un charge prédeterminé, et aussi où un état de fonctionnement de moteur (4) est à une côté maigre dehors la fênetre de depuration (W), la section contrôle (10) provisionne contrôle pour retarder l'instant d'amorçage et pour cette raison de maintenir l'état de fonctionnement de moteur (4) dans la fênetre de depuration (W).

10. Le moteur système à gaz de biomasse (1) selon la revendication 1, dans lequel
le gaz de biomasse est fourni par le zéro governor (30) à un valve A/F (41) du moteur (4),
la section contrôle (10) est configurée de fournir contrôle de perturbation par passer le valve A/F (41) entre une côté maigre et une côté riche, et
dans le cas où le degré d'ouverture de valve A/F (41) est plus grand par un degré predeterminé par rapport au degré de départ correspondant à un rapport excès air associé avec un charge predeterminé, la section contrôle (10) est configurée afin d'augmenter un domaine de variation pour la contrôle de perturbation.
